# EUROPEAN PATENT SPECIFICATION

(11) **EP 3 138 698 B1**
(45) Date of publication and mention of the grant of the patent: **26.12.2018**
(21) Application number: 15802677.3
(22) Date of filing: 04.06.2015
(51) Int. Cl.: B60C 9/00, D01F 6/60, D02G 3/48, D01D 5/06, D01D 5/08, D01F 1/10

(54) **TIRE**
REIFEN
PNEUMATIQUE

(30) Priority: 06.06.2014 JP 2014118038
(43) Date of publication of application: 08.03.2017
(73) Proprietor: Bridgestone Corporation, Tokyo 104-8340 (JP)
(72) Inventor: SUGIMOTO, Kenichi, Tokyo 104-8340 (JP)
(74) Representative: Lang, Johannes
(86) International application number: PCT/JP2015/002832
(87) International publication number: WO 2015/186364

(56) References cited:
- EP-A1- 2 647 744
- WO-A1-2012/157576
- WO-A1-2012/157576
- WO-A1-2014/001039
- JP-A- H 059 803
- JP-A- S5 725 413
- JP-A- H02 300 311
- JP-A- 2005 178 776
- JP-A- 2006 137 677
- JP-A- 2011 525 935
- US-A- 3 253 637
- US-A- 3 801 521
- US-A- 4 094 945
- US-A- 4 263 187
- US-A1- 2010 310 853
- US-A1- 2012 103 498

## Description

### TECHNICAL FIELD

The present disclosure relates to a tire that contains polyamide 4.

### BACKGROUND

Polyamide 66 (PA 66) fiber, polyamide 6 (PA 6) fiber, and the like, which are made using a polyamide resin as a raw material, are conventionally used in tires. Although polyamide fiber can be spun by various methods such as melt spinning, wet spinning, dry-wet spinning, and gel spinning, melt spinning is normally used.

In melt spinning, a resin used as a raw material is melted at a temperature that is at least as high as the melting point of the resin. Consequently, it is difficult to produce fibers by melt spinning using a resin that has a high melting point and thus has a decomposition temperature and a spinning temperature that are close to one another. Therefore, spinning of a resin having a spinning temperature and a decomposition temperature that are close to one another, such as a polyamide 4 (PA 4) resin, by a normal melt spinning method is problematic, and, even if such a resin is spun, the resultant fiber strength is inadequate for polyamide fiber that is to be used in tires.

However, a resin having a high density of amide bonds like a polyamide 4 resin generally has a high melting point and excellent mechanical properties. Therefore, it is anticipated that fiber strength would be improved compared to conventional polyamide 66 (PA 66) fiber and polyamide 6 (PA 6) fiber if fibers could be formed from polyamide 4.

Wet spinning and dry-wet spinning are being investigated as methods for forming fibers from a high-melting point polyamide 4 resin with the objective of avoiding the influence of thermal decomposition through use of these methods. In the case of wet spinning or dry-wet spinning, it is necessary to dissolve the polyamide 4 resin in a solvent prior to spinning.

The solvent in which the polyamide 4 resin is dissolved is required to have excellent dissolving ability with respect to the polyamide 4 resin. Consequently, investigation is being conducted into solvents that, in wet spinning or dry-wet spinning, have high dissolving ability with respect to polyamide 4 and enable spinning of high-strength fibers.

For example, it has been reported that in an example in which formic acid and methylene chloride are used as a solvent for a polyamide 4 resin (for example, refer to PTL 1), the resultant fibers have a strength of 4.21 g/d and an elongation of 20%. Moreover, it has been reported that in an example in which a zinc chloride-containing aqueous solution is used as a solvent for a polyamide 4 resin (for example, refer to PTL 2), the resultant fibers have a dry strength of 3.44 g/d and a dry elongation of 40.6%. Although the formation of fibers from a polyamide 4 resin has already been achieved through the techniques described in PTL 1 and 2, the fiber strength acquired through these techniques is inadequate and the resultant polyamide 4 fiber cannot be used for tire cords.

Furthermore, PTL 3-7 disclose examples in which wet spinning is performed using formic acid or the like as a solvent for a polyamide 4 resin, but do not disclose specific physical properties of the resultant fibers.

Examples have also been disclosed in which phytic acid aqueous solution is used as a solvent for a polyamide 4 resin (for example, refer to PTL 8) and in which aliphatic and chloroaliphatic acids are combined with formic acid as a solvent for a polyamide 4 resin (for example, refer to PTL 9), but specific physical properties of the resultant fibers have not been disclosed.

Therefore, upon consideration of the conventional techniques described above, there is strong demand for the development of a technique that enables spinning of a polyamide 4 resin having high mechanical properties to form fibers having excellent fiber strength and that enables use of such fibers in a tire.

### CITATION LIST

### Patent Literature

PTL 1: US 4,094,945 A
PTL 2: JP S36-5165 B
PTL 3: US 2,711,398 A
PTL 4: US 3,060,141 A
PTL 5: US 3,003,984 A
PTL 6: US 3,033,810 A
PTL 7: US 3,042,647 A
PTL 8: US 2,980,641 A
PTL 9: US 2,734,043 A

### SUMMARY

### (Technical Problem)

An objective of the present disclosure is to provide a tire having improved strength through used of polyamide 4 fiber.

### (Solution to Problem)

A presently disclosed tire comprises a fiber-rubber composite including polyamide 4 fiber that contains polyamide 4, wherein the polyamide 4 fiber has a fiber strength of at least 920 MPa, and a content of the polyamide 4 in the polyamide 4 fiber is 90 mass% to 100 mass%. According to the presently disclosed tire, it is possible to obtain a tire that has improved strength through use of polyamide 4 fiber.

The term "polyamide 4 fiber" is used in the present specification to refer to fibers of linear polymer molecules containing polyamide 4.

The term "polyamide" is used in the present specification as a general term for a polymer having amide bonds in the main chain thereof.

The term "ionic liquid" is used in the present specification to refer to a solvent that is a liquid at a temperature of 100°C or lower, that is composed only of ions, and in which either or both of a cationic part and anionic part are comprised of organic ions.

The term "wet spinning" is used in the present specification to refer to a process in which a solution (spinning solution) of a raw material dissolved in a solvent is discharged from a spinneret directly into a coagulation bath, and is coagulated, drawn, and wound as a yarn.

The term "dry-wet spinning" is used in the present specification to refer to a process in which a solution (spinning solution) of a raw material dissolved in a solvent is initially discharged from a spinneret for a freely selected distance in a gas before being introduced into a coagulation bath, and being coagulated, drawn, and wound as a yarn.

The term "gel spinning" is used in the present specification to refer to a process in which a spinning solution is discharged (extruded) into a coagulating liquid in a coagulation bath in the same way as in "wet spinning" or "dry-wet spinning", and the discharged (extruded) spinning solution is extended by a high factor and wound as a yarn while still in a gel state before coagulation is complete.

The term "melt spinning" is used in the present specification to refer to a process in which a raw material is fluidized by heating to a temperature that is at least as high as the melting temperature thereof, and the fluidized raw material is discharged from a spinneret into a gas, is solidified by cooling, and is wound as a yarn.

For the presently disclosed tire, the polyamide 4 fiber has a fiber strength of at least 920 MPa. According to this configuration, a tire that has excellent durability can be obtained through use of polyamide 4 fiber having excellent fiber strength.

For the presently disclosed tire, it is preferable that the polyamide 4 fiber has an elastic modulus of at least 5 GPa. According to this configuration, a tire that has excellent uniformity can be obtained through use of polyamide 4 fiber having excellent elasticity.

For the presently disclosed tire, it is preferable that the polyamide 4 fiber is obtained by wet spinning, dry-wet spinning, or gel spinning of an ionic liquid solution that is prepared by dissolving polyamide 4 in an ionic liquid, and that polarity of the ionic liquid, in terms of a Kamlet-Taft parameter β, is at least 0.80. According to this configuration, a polyamide 4 resin can be dissolved in the ionic liquid such as to enable formation of fibers from the polyamide 4 resin and, as a result, polyamide 4 fiber having excellent mechanical properties can be obtained, and a tire having improved strength can be obtained through use of this polyamide 4 fiber. Furthermore, the polyamide 4 resin can be reliably dissolved in the ionic liquid such as to enable formation of fibers from the polyamide 4 resin and, as a result, polyamide 4 fiber having excellent mechanical properties can be obtained, and a tire having improved strength can be obtained through use of this polyamide 4 fiber.

For the presently disclosed tire, it is preferable that an anionic part of the ionic liquid is at least one selected from the group consisting of a halogen ion, a carboxylate ion, a phosphate ion, a phosphonate ion, a phosphinate ion, a sulfate ion, and a sulfonate ion. According to this configuration, a polyamide 4 resin can be reliably dissolved in the ionic liquid such as to enable formation of fibers from the polyamide 4 resin and, as a result, polyamide 4 fiber having excellent mechanical properties can be obtained, and a tire having improved strength can be obtained through use of this polyamide 4 fiber.

For the presently disclosed tire, it is preferable that the anionic part of the ionic liquid is at least one selected from the group consisting of a chloride ion, an acetate ion, a diethylphosphate ion, and a dimethylphosphate ion. According to this configuration, a polyamide 4 resin can be reliably dissolved in the ionic liquid such as to enable formation of fibers from the polyamide 4 resin and, as a result, polyamide 4 fiber having excellent mechanical properties can be obtained, and a tire having improved strength can be obtained through use of this polyamide 4 fiber.

For the presently disclosed tire, it is preferable that a cationic part of the ionic liquid is at least one selected from the group consisting of an imidazolium ion, a pyridinium ion, an ammonium ion, and a phosphonium ion. According to this configuration, a polyamide 4 resin can be reliably dissolved in the ionic liquid such as to enable formation of fibers from the polyamide 4 resin and, as a result, polyamide 4 fiber having excellent mechanical properties can be obtained, and a tire having improved strength can be obtained through use of this polyamide 4 fiber.

For the presently disclosed tire, it is preferable that the ionic liquid is at least one selected from the group consisting of 1-ethyl-3-methylimidazolium acetate, 1-ethyl-3-methylimidazolium diethylphosphate, 1-ethyl-3-methylimidazolium dimethylphosphate, and 1-allyl-3-methylimidazolium chloride. According to this configuration, a polyamide 4 resin can be most reliably dissolved in the ionic liquid such as to enable formation of fibers from the polyamide 4 resin and, as a result, polyamide 4 fiber having excellent mechanical properties can be obtained, and a tire having improved strength can be obtained through use of this polyamide 4 fiber.

For the presently disclosed tire, it is preferable that, in the wet spinning, dry-wet spinning, or gel spinning, the ionic liquid solution of the polyamide 4 is coagulated in a liquid containing either or both of water and one or more polar organic solvents. According to this configuration, fiber strength of polyamide 4 fiber can be improved, the polyamide 4 fiber can be appropriately coagulated, and a tire that has improved strength can be obtained through use of this polyamide 4 fiber. Herein, the phrase "appropriately coagulated" refers to formation of a solid product to a level that enables winding within an industrially permissible time frame. For example, "appropriately coagulated" is not inclusive of a situation in which a number of days are required to obtain a product that can be wound or a situation in which the product crumbles into a powder even when solidified and cannot be wound.

For the presently disclosed tire, it is preferable that, in the wet spinning, dry-wet spinning, or gel spinning, the ionic liquid solution of the polyamide 4 is coagulated in a liquid containing ethanol or propanol. According to this configuration, fiber strength of polyamide 4 fiber can be improved, the polyamide 4 fiber can be more appropriately coagulated, and a tire that has improved strength can be obtained through use of this polyamide 4 fiber.

For the presently disclosed tire, it is preferable that the polyamide 4 fiber is obtained by dry-wet spinning or gel spinning of the ionic liquid solution. According to this configuration, fiber strength of polyamide 4 fiber can be improved and a tire that has improved strength can be obtained through use of this polyamide 4 fiber.

For the presently disclosed tire, it is preferable that the polyamide 4 fiber is obtained by melt spinning of a polyamide 4-containing composition that contains polyamide 4 and at least one metal salt selected from the group consisting of alkali metal salts and alkaline earth metal salts. According to this configuration, polyamide 4 fiber having excellent mechanical properties can be obtained by melt spinning and a tire that has improved strength can be obtained through use of this polyamide 4 fiber.

For the presently disclosed tire, it is preferable that the polyamide 4-containing composition contains from 5 mass% to 10 mass% of the metal salt. According to this configuration, polyamide 4 fiber having excellent mechanical properties can be obtained by melt spinning and a tire that has improved strength can be obtained through use of this polyamide 4 fiber.

For the presently disclosed tire, it is preferable that the metal salt is calcium chloride. According to this configuration, polyamide 4 fiber having excellent mechanical properties can be obtained by melt spinning and a tire that has improved strength can be obtained through use of this polyamide 4 fiber.

For the presently disclosed tire, it is preferable that the polyamide 4-containing composition is melt spun at a spinning temperature of from 190°C to 240°C. According to this configuration, polyamide 4 fiber having excellent mechanical properties can be obtained by melt spinning and a tire that has improved strength can be obtained through use of this polyamide 4 fiber.

It is thought that high-melting point polyamide resins tend to form strong hydrogen bonds through their amide bonds. The inventor discovered that a polyamide 4 resin can be favorably dissolved by selecting an ionic liquid as a solvent for the polyamide 4 resin. Known examples of parameters of ionic liquids that are thought to be related to cleavage of hydrogen bonds include the Kamlet-Taft parameter β and hydrogen bond acceptor (HBA) ability. It was discovered that an ionic liquid having a high Kamlet-Taft parameter β or high HBA ability enables dissolution of even a high-melting point polyamide resin without thermal decomposition of the resin. The Kamlet-Taft parameter β and HBA ability of an ionic liquid are thought to be mainly dependent on the properties of an anionic part of the ionic liquid. A method for measuring the Kamlet-Taft parameter β is described in "Phys. Chem. Chem. Phys., 5, p2790-2794 (2003)". The ionic liquids shown below in Tables 1-3 are known examples of ionic liquids having a Kamlet-Taft parameter β of at least 0.80.

**Table 1**

| Name of ionic liquid | β | Source |
|---|---|---|
| Tetrabutylphosphonium valinate | 1.46 | The Journal of Physical Chemistry B, 114, p376-381 (2010) |
| 1-Butyl-3-methylimidazolium pivalate | 1.19 | Chemistry Letters, 38, p2-7 (2009) |
| 1-Butyl-3-methylimidazolium propionate | 1.16 | The Journal of Physical Chemistry B, 112, p7530-7536 (2008) |
| 1-Butyl-1-methylpyrrolidinium dimethylphosphate | 1.14 | Physical Chemistry Chemical Physics, 13, p16831-16840 (2011) |
| 1-Butyl-3-methylimidazolium dimethylphosphate | 1.13 | Physical Chemistry Chemical Physics, 13, p16831-16840 (2011) |
| 1-Butyl-3-methylimidazolium butanoate | 1.10 | Chemistry Letters, 38, p2-7 (2009) |
| 1-Butyl-3-methylimidazolium propionate | 1.10 | Chemistry Letters, 38, p2-7 (2009) |
| 1-Butyl3-methylimidazolium acetate | 1.09 | Chemistry Letters, 38, p2-7 (2009) |
| 1-Butyl-3-methylimidazolium succinate | 1.08 | The Journal of Physical Chemistry B, 112, p7530-7536 (2008) |
| 1-Ethyl-3-methylimidazolium n-butylphosphonate | 1.06 | Green Chemistry, 12, p1274-1280 (2010) |
| Tetrabutylphosphonium alanate | 1.04 | The Journal of Physical Chemistry B, 114, p376-381 (2010) |
| 1-Ethyl-3-methylimidazolium i-propylphosphonate | 1.03 | Green Chemistry, 12, p 1274-1280 (2010) |
| 1-Butyl-3-methylimidazolium maleate | 1.02 | The Journal of Physical Chemistry B, 112, p7530-7536 (2008) |
| 1-Ethyl-3-methylimidazolium ethylphosphonate | 1.02 | Green Chemistry, 12, p 1274-1280 (2010) |

**Table 2**

| Name of ionic liquid | β | Source |
|---|---|---|
| 1-Butyl-3-methylimidazolium formate | 1.01 | Chemistry Letters, 38, p2-7 (2009) |
| 1-Butyl-3-methylimidazolium malate | 1.00 | The Journal of Physical Chemistry B, 112, 7530-7536 (2008) |
| 1-Ethyl-3-methylimidazolium dimethylphosphate | 1.00 | Green Chemistry, 10, p44-46 (2008) |
| 1-Ethyl-3-methylimidazolium methylphosphonate | 1.00 | Green Chemistry, 10, p44-46 (2008) |
| Tetrapentylammonium 2-[bis(2-hydroxyethyl)amino] ethanesulfonate | 1.00 | Analytica Chimica Acta, 218, p241-(1989) |
| 1-Ethyl-3-methylimidazolium formate | 0.99 | Biomacromolecules, 7, p3295-3297 (2006) |
| 1-Hydroxypropyl-3-methylimidazolium acetate | 0.99 | The Journal of Physical Chemistry B, 112, p7530-7536 (2008) |
| 1-Decyl-3-methylimidazolium chloride | 0.98 | New Journal of Chemistry, 34, p1135-1140 (2010) |
| 1-Octyl-3-methylimidazolium chloride | 0.98 | New Journal of Chemistry, 34, p1135-1140 (2010) |
| Tetrabutylammonium 2-(cyclohexylamino)-ethanesulfonate | 0.98 | Analytica Chimica Acta, 218, p241-(1989) |
| 1-Ethyl-3-methylimidazolium phosphinate | 0.97 | Green Chemistry, 12, p1274-1280 (2010) |
| 1-Hexyl-3-methylimidazolium chloride | 0.97 | New Journal of Chemistry, 34, p1135-1140 (2010) |
| Tetrapentylammonium 2-hydroxy-4-morpholinepropanesulfate | 0.96 | Analytica Chimica Acta, 218, p241-(1989) |

**Table 3**

| Name of ionic liquid | β | Source |
|---|---|---|
| 1-Butyl-3-methylimidazolium chloride | 0.95 | New Journal of Chemistry, 34, p1135-1140 (2010) |
| Tetrapentylammonium 2-(cyclohexylamino)-ethanesulfonate | 0.91 | Analytica Chimica Acta, 218, p241-(1989) |
| 1-Butyl-3-methylimidazolium bromide | 0.87 | New Journal of Chemistry, 34, p1135-1140 (2010) |
| 1-Butyl-3-methylimidazolium glycolate | 0.87 | The Journal of Physical Chemistry B, 112, p7530-7536 (2008) |
| 1-Allyl-3-methylimidazolium chloride | 0.83 | Biomacromolecules, 7, p3295-3297 (2006) |
| Tetrapropylammonium 2-hydroxy-4-morpholinepropanesulfate | 0.83 | Analytica Chimica Acta, 218, p241-(1989) |
| 1-Butyl-3-methylimidazolium nitrite | 0.81 | New Journal of Chemistry, 34, p1135-1140 (2010) |
| 1-Decyl-3-methylimidazolium nitrate | 0.81 | New Journal of Chemistry, 34, p1135-1140 (2010) |
| Tetrabutylammonium2-[bis(2-hydroxyethyl)amino]ethanesulfonate | 0.81 | Analytica Chimica Acta, 218, p241-(1989) |
| 1-Octyl-3-methylimidazolium nitrate | 0.80 | New Journal of Chemistry, 34, p1135-1140 (2010) |
| Tetrapropylammonium 2-(cyclohexylamino)-ethanesulfonate | 0.80 | Analytica Chimica Acta, 218, p241-(1989) |

With regards to HBA ability, "Cellulose Solvents: For Analysis, Shaping and Chemical Modification, Chapter 6, p125-135" for example provides an order of HBA abilities such as shown below based on results of quantitative measurement by ¹H-NMR.
CH₃COO⁻ (acetate ion) > (EtO)₂POO⁻ (diethylphosphate ion) > Cl⁻ (chloride ion) > OTf⁻ (trifluoromethanesulfonate ion) > CH₃SO₃⁻ (methanesulfonate ion) > Br⁻ (bromide ion) > SCN⁻ (thiocyanate ion) > I⁻ (iodide ion) > N(Tf)₂^{~} (bis(trifluoromethylsulfonyl)imide ion)

The inventor confirmed that ionic liquids including acetate ions, diethylphosphate ions, and chloride ions, which are anions having high HBA ability as shown above, have high dissolving ability as solvents with respect to a polyamide resin, which indicated that HBA ability and polyamide solubility are related.

### (Advantageous Effect)

According to the present disclosure, it is possible to provide a tire having improved strength through use of polyamide 4 fiber.

### BRIEF DESCRIPTION OF THE DRAWINGS

In the accompanying drawings:
FIG. 1 is a schematic cross-sectional view illustrating an embodiment of wet spinning for obtaining polyamide 4 fiber;
FIG. 2 is a schematic cross-sectional view illustrating an embodiment of dry-wet spinning for obtaining polyamide 4 fiber;
FIG. 3 is a schematic cross-sectional view illustrating an embodiment of wet spinning for obtaining polyamide 4 fiber; and
FIG. 4 is a schematic cross-sectional view illustrating an embodiment of dry-wet spinning for obtaining polyamide 4 fiber.

### DETAILED DESCRIPTION

An embodiment for implementing the presently disclosed tire will be demonstratively described hereinafter.

### (Tire)

The presently disclosed tire includes at least a fiber-rubber composite. The presently disclosed tire can be produced by a commonly known method through standard molding and vulcanization processes.

### <Fiber-rubber composite>

The fiber-rubber composite includes at least polyamide 4 fiber and rubber, and may further include other components as necessary.

The site at which the fiber-rubber composite is used in the tire can be selected as appropriate depending on the objective without any specific limitations. Examples of sites where the fiber-rubber composite can be used include a carcass ply, a belt ply, and a belt protective layer. The fiber-rubber composite may be used at one such site, or may be used at two or more such sites.

### «Rubber»

The rubber can be selected as appropriate depending on the objective without any specific limitations. Examples of rubbers that can be used include natural rubber (NR); a homopolymer of a conjugated diene compound such as polyisoprene rubber (IR), polybutadiene rubber (BR), or polychloroprene rubber; a copolymer of a conjugated diene compound and a vinyl compound such as styrene-butadiene copolymer rubber (SBR), vinylpyridine-butadiene-styrene copolymer rubber, acrylonitrile-butadiene copolymer rubber, acrylic acid-butadiene copolymer rubber, methacrylic acid-butadiene copolymer rubber, methyl acrylate-butadiene copolymer rubber, and methyl methacrylate-butadiene copolymer rubber; a copolymer of a diene compound and an olefin such as ethylene, propylene, or isobutylene; a copolymer of an olefin and a non-conjugated diene; and a halogenated product of any of these rubbers. One of such rubbers may be used individually, or two or more of such rubbers may be used together.

Among these rubbers, natural rubber (NR), polyisoprene rubber (IR), polybutadiene rubber (BR), and styrene-butadiene copolymer rubber (SBR) are preferable in terms of adhesiveness to polyamide 4 fiber.

### «Other components»

Other components that may be included in the fiber-rubber composite as necessary can be selected as appropriate depending on the objective without any specific limitations. Examples of such other components include sulfur, organosulfur compounds, other vulcanizing agents, vulcanization accelerators, oils such as vegetable oil, fillers, vulcanization accelerator aids, age resistors, polyolefin fiber of polyethylene, polypropylene, and the like, polyamide fiber of polyamide 6, polyamide 66, and the like, polyester fiber of polyethylene terephthalate, polyethylene naphthalate, and the like, and cellulose fiber such as lyocell and rayon. One of such other components may be used individually, or two or more of such other components may be used together. Moreover, polyolefin fiber, polyamide fiber other than the polyamide 4 fiber, and polyester fiber can be used with the polyamide 4 fiber to form composite fiber.

### «Polyamide 4 fiber»

The polyamide 4 fiber is obtained by spinning polyamide that contains 90 mass% to 100 mass% of the polyamide 4 and that may further contain other polyamide components as necessary. The polyamide 4 fiber can be obtained by dissolving the polyamide such as described above in an ionic liquid and performing wet spinning, dry-wet spinning, or gel spinning thereof.

Alternatively, the polyamide 4 fiber can be obtained through melt spinning of a polyamide 4-containing composition that contains polyamide 4 and an alkali metal salt and/or an alkaline earth metal salt. Fibers obtained by melt spinning as described above are subsequently washed and are then used in a state in which the aforementioned metal salts have been removed.

The polyamide 4 fiber may contain a polyolefin such as polyethylene or polypropylene; a polyester such as polyethylene terephthalate or polyethylene naphthalate; or the like. The polyamide has a polyamide 4 content of from 90 mass% to 100 mass%.

The fiber strength of the polyamide 4 fiber can be selected as appropriate depending on the objective without any specific limitations and is at least 920 MPa, more preferably at least 950 MPa, and particularly preferably at least 990 MPa.

The elastic modulus of the polyamide 4 fiber can be selected as appropriate depending on the objective without any specific limitations and is preferably at least 5.0 GPa, more preferably at least 5.4 GPa, and particularly preferably at least 6.0 GPa.

### -Polyamide 4-

The polyamide 4 can for example be prepared by the 2-pyrrolidone ring-opening polymerization method described in "Polymer, 46, p9987-9993 (2005)". In this method, a mixture of 2-pyrrolidone (produced by Tokyo Chemical Industry Co., Ltd.) and metal Na is heated to 50°C under reduced pressure while being mixed. Once the metal Na and 2-pyrrolidone have reacted, terephthaloyl dichloride is added and a reaction is carried out for 24 hours at 50°C under reduced pressure while performing mixing. Once polymerization has occurred, the mixture is dissolved in formic acid and is re-precipitated using acetone. The precipitate is washed with water and ethanol and is subsequently dried to yield polyamide 4.

### --2-Pyrrolidone raw material--

The 2-pyrrolidone raw material can be selected as appropriate depending on the objective without any specific limitations other than being a material that contains 2-pyrrolidone. For example, a material produced from petroleum or a material produced from a bio-derived resource, such as γ-aminobutyric acid, through use of a microorganism-derived enzyme may be used. One of such materials may be used individually, or two or more of such materials may be used together.

### -Other polyamide components-

Another polyamide component such as mentioned above can be selected as appropriate depending on the objective without any specific limitations other than being a polymer that has amide bonds in the main chain thereof. Examples of other polyamide components that can be used include aliphatic polyamides, fully aromatic polyamides, and semi-aromatic polyamides. One of such other polyamide components may be used individually, or two or more of such other polyamide components may be used together.

### --Aliphatic polyamides--

An aliphatic polyamide such mentioned above can be selected as appropriate depending on the objective without any specific limitations. Examples of aliphatic polyamides that can be used include polyamide 6, polyamide 46, polyamide 56, polyamide 66, polyamide 410, polyamide 610, polyamide 11, polyamide 12, polyamide 1010, polyamide 612, polyamide 6/66, polyamide 6/612, polyamide 6C, polyamide 6/66/6C, and polyamide 66/6C (C is an abbreviation of cyclohexanedicarboxylic acid). One of such aliphatic polyamides may be used individually, or two or more of such aliphatic polyamides may be used together.

### --Fully aromatic polyamides--

A fully aromatic polyamide such as mentioned above can be selected as appropriate depending on the objective without any specific limitations. Examples of fully aromatic polyamides that can be used include the commercial products Kevlar® (Kevlar is a registered trademark in Japan, other countries, or both), Technora® (Technora is a registered trademark in Japan, other countries, or both), Twaron® (Twaron is a registered trademark in Japan, other countries, or both), Nomex® (Nomex is a registered trademark in Japan, other countries, or both), and Conex® (Conex is a registered trademark in Japan, other countries, or both). One of such fully aromatic polyamides may be used individually, or two or more of such fully aromatic polyamides may be used together.

### --Semi-aromatic polyamides--

A semi-aromatic polyamide such as mentioned above can be selected as appropriate depending on the objective without any specific limitations. Examples of semi-aromatic polyamides that can be used include polyamide 4T, polyamide MXD6 (MXD: m-xylylenediamine), polyamide 6T, polyamide 61, polyamide 6/6T, polyamide 6/6I, polyamide 66/6T, polyamide 66/6I, polyamide 6T/6I, polyamide 6/6T/6I, polyamide 66/6T/6I, polyamide 6/12/6T, polyamide 66/12/6T, polyamide 6/12/6I, polyamide 66/12/61, and polyamide 9T (I is an abbreviation of isophthalic acid and T is an abbreviation of terephthalic acid). One of such semi-aromatic polyamides may be used individually, or two or more of such semi-aromatic polyamides may be used together.

The melting point of a polyamide referred to in the present embodiment can be measured using a differential scanning calorimeter (for example, an STA7200 produced by Yamato Scientific Co., Ltd.). More specifically, the measurement method involves heating a powder of the polyamide to 340°C at 5°C/minute and the melting point is indicated by the peak top of a heat absorption peak that is observed.

### -Ionic liquid-

Herein, the term "ionic liquid" refers to a solvent that is a liquid at a temperature of 100°C or lower, that is composed only of ions, and in which either or both of a cationic part and an anionic part are comprised of organic ions. The ionic liquid is preferably composed of the cationic part and the anionic part.

The ionic liquid can be selected as appropriate depending on the objective without any specific limitations. Examples of ionic liquids that can be used include 1-ethyl-3-methylimidazolium acetate, 1-ethyl-3-methylimidazolium diethylphosphate, 1-ethyl-3-methylimidazolium dimethylphosphate, 1-allyl-3-methylimidazolium chloride, 1-ethyl-3-methylimidazolium chloride, 1-butyl-3-methylimidazolium chloride, 1-ethyl-3-methylimidazolium methanesulfonate, 1-butyl-3-methylimidazolium methanesulfonate, methyl-tributylammonium methylsulfate, 1,2,3-trimethylimidazolium methylsulfate, 1,3-dimethylimidazolium chloride, 1,3-dimethylimidazolium hydrogensulfate, 1-ethyl-3-methylimidazolium hydrogensulfate, 1-butyl-3-methylimidazolium hydrogensulfate, 1-ethyl-3-methylimidazolium tetrachloroaluminate, 1-butyl-3-methylimidazolium hydrogentetrachloroaluminate, 1-butyl-3-methylimidazolium acetate, 1-ethyl-3-methylimidazolium ethylsulfate, 1-butyl-3-methylimidazolium methylsulfate, 1-ethyl-3-methylimidazolium thiocyanate, 1-butyl-3-methylimidazolium thiocyanate, 1-ethyl-2,3-dimethylimidazolium ethylsulfate, tributylmethylammonium methylsulfate, 1-butyl-3-methylimidazolium tetrafluoroborate, 1-butyl-1-methylpyrrolidinium dicyanamide, 1-butyl-3-methylimidazolium hexafluoroantimonate, trihexyltetradecylphosphonium bis(2,4,4-trimethyl-pentyl)phosphinate, trihexyltetradecylphosphonium bis(trifluoromethyl-sulfonyl)amide, trihexyltetradecylphosphonium bromide, trihexyltetradecylphosphonium chloride, trihexyltetradecylphosphonium decanoate, 1-benzyl-3-methylimidazolium chloride, 1-benzyl-3-methylimidazolium hexafluorophosphate, 1-butyl-2,3-dimethylimidazolium chloride, 1-hexyl-3-methylimidazolium chloride, 1-methyl-3-octylimidazolium chloride, 1-butylpyridinium bromide, 1-butyl-4-methylpyridinium chloride, tetraoctylammonium chloride, tetrabutylammonium chloride, tetraethylammonium trifluoroacetate, tetrahexylammonium iodide, tetrabutylphosphonium bromide, tetrabutylphosphonium chloride, tetrabutylphosphonium valinate, 1-butyl-3-methylimidazolium pivalate, 1-butyl-3-methylimidazolium propionate, 1-butyl-1-methylpyrrolidinium dimethylphosphate, 1-butyl-3-methylimidazolium dimethylphosphate, 1-butyl-3-methylimidazolium butanoate, 1-butyl-3-methylimidazolium propionate, 1-butyl-3-methylimidazolium acetate, 1-butyl-3-methylimidazolium succinate, 1-ethyl-3-methylimidazolium n-butylphosphonate, tetrabutylphosphonium alanate, 1-ethyl-3-methylimidazolium i-propylphosphonate, 1-butyl-3-methylimidazolium maleate, 1-ethyl-3-methylimidazolium ethylphosphonate, 1-butyl-3-methylimidazolium formate, 1-butyl-3-methylimidazolium maleate, 1 -ethyl-3-methylimidazolium methylphosphonate, tetrapentylammonium 2-[bis(2-hydroxyethyl)amino]ethanesulfonate, 1-ethyl-3-methylimidazolium formate, 1-hydroxypropyl-3-methylimidazolium acetate, 1-decyl-3-methylimidazolium chloride, 1-octyl-3-methylimidazolium chloride, tetrabutylammonium 2-(cyclohexylamino)-ethanesulfonate, 1-ethyl-3-methylimidazolium phosphinate, 1-hexyl-3-methylimidazolium chloride, tetrapentylammonium 2-hydroxy-4-morpholinepropanesulfate, 1-butyl-3-methylimidazolium chloride, tetrapentylammonium 2-(cyclohexylamino)-ethanesulfonate, 1-butyl-3-methylimidazolium bromide, and 1-butyl-3-methylimidazolium glycolate. One of such ionic liquids may be used individually, or two or more of such ionic liquids may be used together.

Among these ionic liquids, those having high polarity are preferable. Specifically, ionic liquids having a Kamlet-Taft parameter β of at least 0.80 are preferable in terms of enabling reliable improvement of fiber strength of the polyamide 4 fiber.

### --Ionic liquids having a Kamlet-Taft parameter β of at least 0.80--

The Kamlet-Taft parameter β is considered to be an index that indicates the effectiveness of severing of hydrogen bonds. An ionic liquid having a Kamlet-Taft parameter β of at least 0.80 such as mentioned above can be selected as appropriate depending on the objective without any specific limitations. Examples of such ionic liquids include 1-ethyl-3-methylimidazolium acetate, 1-ethyl-3-methylimidazolium diethylphosphate, 1-ethyl-3-methylimidazolium dimethylphosphate, 1-allyl-3-methylimidazolium chloride, tetrabutylphosphonium valinate, 1-butyl-3-methylimidazolium pivalate, 1-butyl-3-methylimidazolium propionate, 1-butyl-1-methylpyrrolidinium dimethylphosphate, 1-butyl-3-methylimidazolium dimethylphosphate, 1-butyl-3-methylimidazolium butanoate, 1-butyl-3-methylimidazolium propionate, 1-butyl-3-methylimidazolium acetate, 1-butyl-3-methylimidazolium succinate, 1-ethyl-3-methylimidazolium n-butylphosphonate, tetrabutylphosphonium alanate, 1-ethyl-3-methylimidazolium i-propylphosphonate, 1-butyl-3-methylimidazolium maleate, 1-ethyl-3-methylimidazolium ethylphosphonate, 1-butyl-3-methylimidazolium formate, 1-butyl-3-methylimidazolium maleate, 1-ethyl-3-methylimidazolium methylphosphonate, tetrapentylammonium 2-[bis(2-hydroxyethyl)amino]ethanesulfonate, 1-ethyl-3-methylimidazolium formate, 1-hydroxypropyl-3-methylimidazolium acetate, 1-decyl-3-methylimidazolium chloride, 1-octyl-3-methylimidazolium chloride, tetrabutylammonium 2-(cyclohexylamino)-ethanesulfonate, 1-ethyl-3-methylimidazolium phosphinate, 1-hexyl-3-methylimidazolium chloride, tetrapentylammonium 2-hydroxy-4-morpholinepropanesulfate, 1-butyl-3-methylimidazolium chloride, tetrapentylammonium 2-(cyclohexylamino)-ethanesulfonate, 1-butyl-3-methylimidazolium bromide, and 1-butyl-3-methylimidazolium glycolate. One of such ionic liquids may be used individually, or two or more of such ionic liquids may be used together.

Among these ionic liquids, 1-ethyl-3-methylimidazolium acetate, 1-ethyl-3-methylimidazolium diethylphosphate, 1-ethyl-3-methylimidazolium dimethylphosphate, and 1-allyl-3-methylimidazolium chloride are preferable in terms of enabling more reliable improvement of fiber strength of the polyamide 4 fiber.

A specific method that can be used to measure the Kamlet-Taft parameter β is described in "Phys. Chem. Chem. Phys., 5, p2790-2794 (2003)".

### --Anionic part--

The anionic part of the ionic liquid can be selected as appropriate depending on the objective without any specific limitations and examples thereof include a halogen ion, a carboxylate ion, a phosphate ion, a phosphonate ion, a phosphinate ion, a sulfate ion, a sulfonate ion, a nitrate ion, and a nitrite ion. One of such types of ions may be used individually, or two or more of such types of ions may be used together.

Among these ions, a halogen ion, a carboxylate ion, a phosphate ion, a phosphonate ion, a phosphinate ion, a sulfate ion, and a sulfonate ion are preferable in terms of having excellent dissolving ability with respect to a polyamide resin.

### ---Halogen ions---

A halogen ion such as mentioned above can be selected as appropriate depending on the objective without any specific limitations. Examples of halogen ions that can be used include Cl⁻, Br⁻, and I⁻. One type of halogen ion may be used individually, or two or more types of halogen ions may be used together.

Among these halogen ions, Cl⁻ (chloride ion) is preferable in terms of having a high Kamlet-Taft parameter β.

### ---Carboxylate ions---

A carboxylate ion such as mentioned above can be selected as appropriate depending on the objective without any specific limitations. Examples of carboxylate ions that can be used include HCOO⁻ (formate ion), CH₃COO⁻ (acetate ion), C₂H₅COO⁻ (propionate ion), C₃H₇COO⁻ (butanoate ion), t-BuCOO⁻ (pivalate ion), C₉H₁₉COO⁻ (decanoate ion), a malate ion, a maleate ion, a succinate ion, a glycolate ion, and a valinate ion. One type of carboxylate ion may be used individually, or two or more types of carboxylate ions may be used together.

Among these carboxylate ions, CH₃COO⁻ (acetate ion) is preferable in terms of ease of material acquisition.

### ---Phosphate ions---

A phosphate ion such as mentioned above can be selected as appropriate depending on the objective without any specific limitations. Examples of phosphate ions that can be used include a phosphate or alkylphosphate ion represented by formula (I) shown below, where an alkyl group of the alkylphosphate ion is a hydrocarbon group having a carbon number of 1-18. One type of phosphate ion may be used individually, or two or more types of phosphate ions may be used together.

Among these phosphate ions, a diethylphosphate ion and a dimethylphosphate ion are preferable.

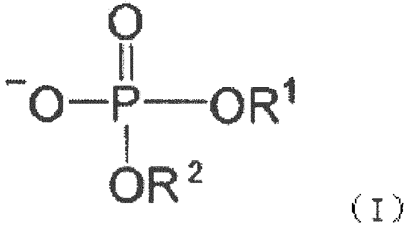

(In formula (I), R¹ and R² are each, independently of one another, a hydrogen atom or an alkyl group.)

### ---Phosphonate ions---

A phosphonate ion such as mentioned above can be selected as appropriate depending on the objective without any specific limitations. Examples of phosphonate ions that can be used include a phosphonate or alkylphosphonate ion represented by formula (II) shown below, where an alkyl group of the alkylphosphonate ion is a hydrocarbon group having a carbon number of 1-18. One type of phosphonate ion may be used individually, or two or more types of phosphonate ions may be used together.

Among these phosphonate ions, methylphosphonate and ethylphosphonate are preferable.

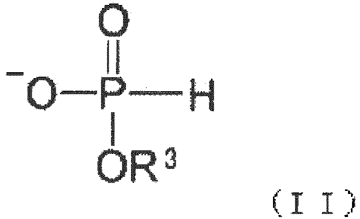

(In formula (II), R³ is a hydrogen atom or an alkyl group.)

### ---Phosphinate ions---

A phosphinate ion such as mentioned above is represented by formula (III) shown below.

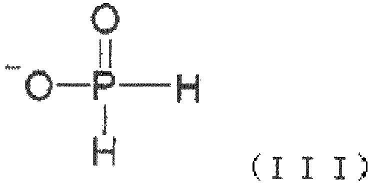

### ---Sulfate ions---

A sulfate ion such as mentioned above can be selected as appropriate depending on the objective without any specific limitations. Examples of sulfate ions that can be used include a hydrogensulfate ion, a methylsulfate ion, an ethylsulfate ion, an n-propylsulfate ion, and an n-butylsulfate ion. One type of sulfate ion may be used individually, or two or more types of sulfate ions may be used together.

### ---Sulfonate ions---

A sulfonate ion such as mentioned above can be selected as appropriate depending on the objective without any specific limitations. Examples of sulfonate ions that can be used include a methanesulfonate ion, a toluenesulfonate ion, and a benzenesulfonate ion. One type of sulfonate ion may be used individually, or two or more types of sulfonate ions may be used together.

### --Cationic part--

The cationic part of the ionic liquid can be selected as appropriate depending on the objective without any specific limitations and examples thereof include an imidazolium ion, a pyridinium ion, an ammonium ion, a phosphonium ion, a pyrrolidinium ion, a piperidinium ion, an isoquinolinium ion, a pyrrolinium ion, a triazolium ion, a benzotriazolium ion, a tetrazolium ion, a thiazolium ion, an oxazolium ion, a pyridazinium ion, a morpholinium ion, a piperazinium ion, and a sulfonium ion. One of such types of ions may be used individually, or two or more of such types of ions may be used together.

Among these ions, an imidazolium ion is advantageous in terms of ease of material acquisition.

### ---Imidazolium ions---

An imidazolium ion such as mentioned above can be selected as appropriate depending on the objective without any specific limitations. Examples of imidazolium ions that can be used include ions such as 1,3-dimethylimidazolium, 1-ethyl-3-methylimidazolium, 1-methyl-3-ethylimidazolium, 1,2,3-trimethylimidazolium, 1,2,3,4-tetramethylimidazolium, 1,3-dimethyl-2-ethylimidazolium, 1,2-dimethyl-3-ethylimidazolium, 1,2,3-triethylimidazolium, 1,2,3,4-tetraethylimidazolium, 1,3-dimethyl-2-phenylimidazolium, 1,3-dimethyl-2-benzylimidazolium, 1-benzyl-2,3-dimethylimidazolium, 4-cyano-1,2,3-trimethylimidazolium, 3-cyanomethyl-1,2-dimethylimidazolium, 4-acetyl-1,2,3-trimethylimidazolium, 3-acetylmethyl-1,2-dimethylimidazolium, 4-carboxymethyl-1,2,3-trimethylimidazolium, 4-methoxy-1,2,3-trimethylimidazolium, 4-formyl-1,2,3-trimethylimidazolium, 3-formylmethyl-1,2-dimethylimidazolium, 3-hydroxyethyl-1,2-dimethylimidazolium, 2-hydroxyethyl-1,3-dimethylimidazolium, N,N'-dimethylbenzoimidazolium, N,N'-diethylbenzoimidazolium, and N-methyl-N'-ethylbenzoimidazolium. One type of imidazolium ion may be used individually, or two or more types of imidazolium ions may be used together.

Among these imidazolium ions, a 1-ethyl-3-methylimidazolium ion is preferable in terms of having a high degree of safety.

### ---Pyridinium ions---

A pyridinium ion such as mentioned above can be selected as appropriate depending on the objective without any specific limitations. Examples of pyridinium ions that can be used include ions such as pyridinium, 1-methylpyridinium, 1-ethylpyridinium, 1-propylpyridinium, N-ethyl-3-methylpyridinium, and N-butylpyridinium. One type of pyridinium ion may be used individually, or two or more types of pyridinium ions may be used together.

### ---Ammonium ions---

An ammonium ion such as mentioned above can be selected as appropriate depending on the objective without any specific limitations. Examples of ammonium ions that can be used include a tetramethylammonium ion, a trimethylethylammonium ion, a trimethylpropylammonium ion, a trimethylisopropylammonium ion, a dimethyldiethylammonium ion, a dimethylethylpropylammonium ion, a trimethylbutylammonium ion, a triethylmethylammonium ion, a tetraethylammonium ion, a dimethylethylbutylammonium ion, a dimethylpropylbutylammonium ion, a trimethylhexylammonium ion, a methylethyldi(isopropyl)ammonium ion, a diethyldi(isopropyl)ammonium ion, a trimethylheptylammonium ion, a trimethyloctylammonium ion, a triethyl(2-methylbutyl)ammonium ion, a tetrapropylammonium ion, a triethylhexylammonium ion, a triethyloctylammonium ion, a tetrabutylammonium ion, a tributylhexylammonium ion, a tributylheptylammonium ion, a tributyloctylammonium ion, a tetrapentylammonium ion, a tetrahexylammonium ion, a trioctylpropylammonium ion, a tetraheptylammonium ion, a tetraoctylammonium ion, a tetrapenyltetradecylammonium ion, a trihexyltetradecylammonium ion, a tridodecylmethylammonium ion, a tetradodecylammonium ion, a trioctylmethylammonium ion, a trimethylmethoxymethylammonium ion, a methoxymethylenedimethylethylammonium ion, a methoxyethyldimethylethylammonium ion, an ethoxyethyldimethylethylammonium ion, a 2-hydroxyethylammonium ion, a 2-hydroxyethyltrimethylammonium ion, a 2-hydroxydiethylammonium ion, a triethyl(methoxymethyl)ammonium ion, a 2-hydroxytriethylammonium ion, and a tetrakis(2-hydroxyethyl)ammonium ion. One type of ammonium ion may be used individually, or two or more types of ammonium ions may be used together.

### ---Phosphonium ions---

A phosphonium ion such as mentioned above can be selected as appropriate depending on the objective without any specific limitations. Examples of phosphonium ions that can be used include tetraarylphosphonium ions such as tetraphenylphosphonium, tetra-p-tolylphosphonium, tetrakis(2-methoxyphenyl)phosphonium, tetrakis(3-methoxyphenyl)phosphonium, and tetrakis(4-methoxyphenyl)phophonium; triarylphosphonium ions such as triphenylbenzylphosphonium, triphenylphenacylphosphonium, triphenylmethylphosphonium, and triphenylbutylphosphonium; and tetraalkylphosphonium ions such as triethylbenzylphosphonium, tributylbenzylphosphonium, tetraethylphosphonium, tetrabutylphosphonium, tetrahexylphosphonium, triethylphenacylphosphonium, and tributylphenacylphosphonium. One type of phosphonium ion may be used individually, or two or more types of phosphonium ions may be used together.

### -Dissolving-

The method by which the polyamide is dissolved in the ionic liquid can be selected as appropriate depending on the objective without any specific limitations. For example, an ionic liquid solution of the polyamide can be obtained by bringing the ionic liquid and the polyamide into contact and then performing heating, mixing, or the like as necessary.

The method by which the ionic liquid and the polyamide are brought into contact can be selected as appropriate depending on the objective without any specific limitations. For example, the polyamide may be added to the ionic liquid or the ionic liquid may be added to the polyamide.

The method by which mixing is performed can be selected as appropriate depending on the objective without any specific limitations. Examples of methods that can be adopted include a method in which the ionic liquid and the polyamide are mechanically mixed using a stirring bar, a stirring vane, a stirring rod, or the like, a method in which the ionic liquid and the polyamide are placed in a tightly sealed container and are mixed by shaking the container, and a method in which mixing is performed by ultrasound.

The mixing time can be selected as appropriate depending on the objective without any specific limitations. For example, mixing may be performed until the polyamide has suitably dissolved.

In a situation in which heating is performed when dissolving the polyamide, the heating temperature can be selected as appropriate depending on the objective without any specific limitations, but is preferably no higher than 150°C. It is advantageous for the heating temperature to be in this preferable range in terms of reducing deterioration of the ionic liquid. Moreover, the heating is not limited to standard heating and may alternatively be performed by microwaves or the like.

The polyamide may be dissolved until complete dissolution thereof is visually confirmed or an undissolved portion of the polyamide may be left. In a situation in which an undissolved portion of the polyamide is left, the undissolved component can for example be removed by a filtration process. The ionic liquid solution in which the polyamide is dissolved may be spun after undergoing a filtration process such as described above or may be spun after undergoing a defoaming process.

### -Wet spinning, dry-wet spinning, and gel spinning-

Wet spinning refers to a process in which the ionic liquid solution of the polyamide is discharged from a spinneret directly into a coagulation bath, and is coagulated, drawn, and wound as a yarn. Moreover, wet spinning refers to a process in which the aforementioned solution is discharged directly into a coagulating liquid from a spinneret that is positioned in a coagulation bath that holds the coagulating liquid, and is coagulated, drawn, and wound as a yarn.

Dry-wet spinning refers to a process in which the ionic liquid solution of the polyamide is initially discharged from a spinneret for a freely selected distance in a gas before being introduced into a coagulation bath, and being coagulated, drawn, and wound as a yarn.

The term "coagulation bath" refers to a bath tub that is filled with a coagulating liquid for coagulating the discharged polyamide.

Gel spinning refers to a process in which a spinning solution is discharged (extruded) into a coagulating liquid in a coagulation bath in the same way as in wet spinning or dry-wet spinning, and the discharged (extruded) spinning solution is extended by a high factor and wound as a yarn while still in a gel state before coagulation is complete. The gel spinning may for example be (i) wet-type gel spinning in which the spinning solution is discharged in the same way as in wet spinning or (ii) dry-wet-type gel spinning in which the spinning solution is discharged in the same way as in dry-wet spinning.

Although the polyamide 4 fiber can be obtained by any of wet spinning, dry-wet spinning, and gel spinning, dry-wet spinning is preferable in terms of enabling improvement of fiber strength of the polyamide 4 fiber. It is expected that further improvement of fiber strength of the polyamide 4 fiber can be obtained through further extension by gel spinning.

One advantage of wet spinning, dry-wet spinning, and gel spinning is that spinning is possible without causing thermal decomposition of the polyamide 4 resin. Another advantage is that high-molecular weight resins can be spun by these methods. Herein, since the resin is dissolved and is extended in a gel state, there is little restriction on the molecular weight of the resin. Consequently, high-molecular weight resins can be spun and higher strength fibers can be easily produced.

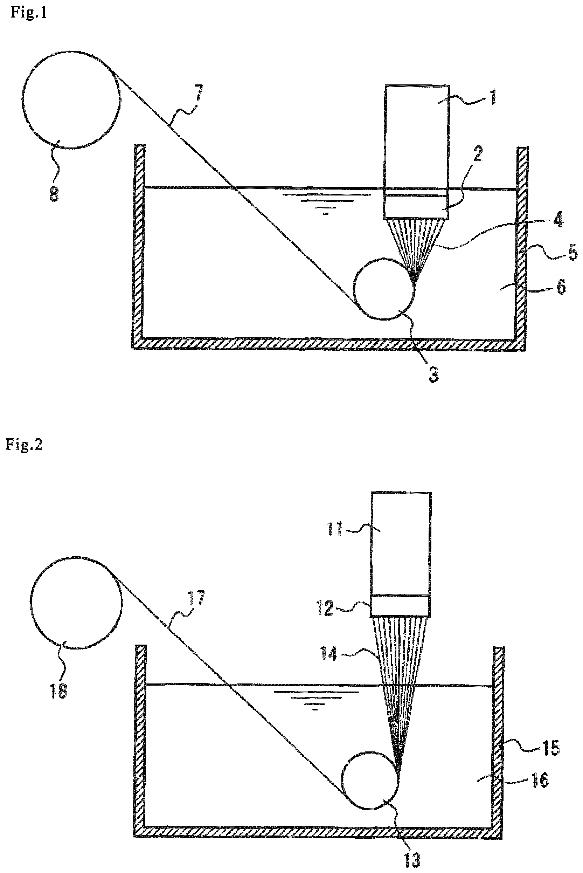

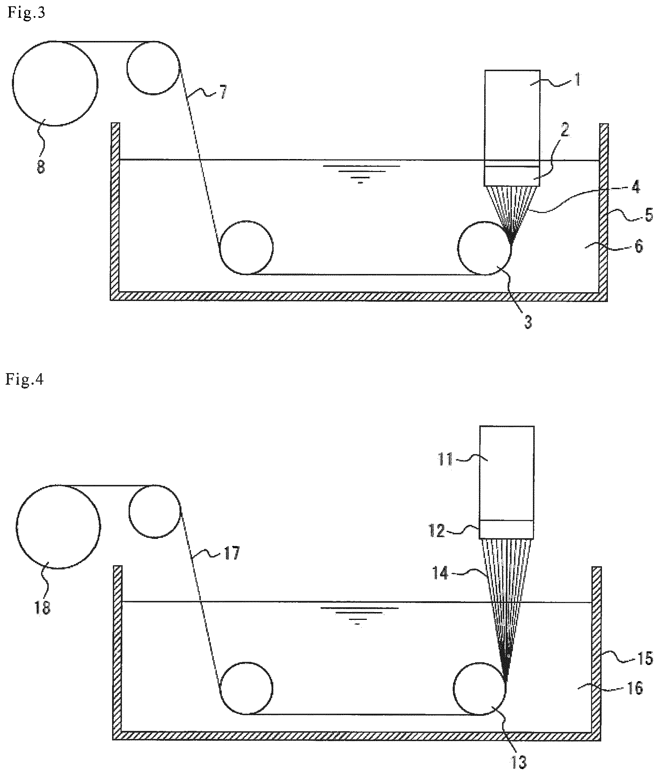

FIGS. 1 and 3 are schematic cross-sectional views illustrating examples of wet spinning for obtaining the polyamide 4 fiber.

The ionic liquid solution of the polyamide described above is discharged from a spinneret 2 positioned on an extruder 1. The extruder 1 may be a single-screw extruder or a multi-screw extruder. The discharged ionic liquid solution 4 of the polyamide comes into contact with a coagulating liquid 6 in a coagulation bath 5, which causes coagulation of the ionic liquid solution of the polyamide to form polyamide 4 fiber 7. The polyamide 4 fiber 7 is wound around a collecting roller.

Although a roller 3 is positioned in the coagulation bath 5 in the present embodiment, this positioning is not a specific limitation. For example, a roller may be positioned above the liquid surface of the coagulation bath 5 in either a contact state or a non-contact state with the liquid surface.

FIGS. 2 and 4 are schematic cross-sectional views illustrating examples of embodiments of dry-wet spinning for obtaining the polyamide 4 fiber.

The ionic liquid solution of the polyamide described above is discharged from a spinneret 12 positioned on an extruder 11. The extruder 11 may be a single-screw extruder or a multi-screw extruder. The ionic liquid solution 14 of the polyamide that is discharged is initially spun in a gas and is then immersed in a coagulating liquid 16 in a coagulation bath 15. The ionic liquid solution of the polyamide coagulates to form polyamide 4 fiber 17. The polyamide 4 fiber 17 is wound around a collecting roller.

Although a roller 13 is positioned in the coagulation bath 15 in the present embodiment, this positioning is not a specific limitation. For example, a roller may be positioned above the liquid surface of the coagulation bath 15 in either a contact state or a non-contact state with the liquid surface.

### --Coagulation--

With regards to the coagulating liquid that is used to cause coagulation, it is preferable to use a liquid containing water and/or a polar organic solvent as this enables appropriate coagulation of the polyamide 4 fiber.

### ---Polar organic solvent---

A polar organic solvent such as mentioned above can be selected as appropriate depending on the objective without any specific limitations. Examples of polar solvents that can be used include methanol, ethanol, 1-propanol, 2-propanol, 1-butanol, formic acid, acetic acid, dimethyl sulfoxide, N,N-dimethylformamide, acetonitrile, acetone, and tetrahydrofuran. One of such polar organic solvents may be used individually, or two or more of such polar organic solvents may be used together.

Among these polar organic solvents, ethanol and 2-propanol are preferable in terms of enabling coagulation into a firm gel form. When the ionic liquid solution of the polyamide is discharged into the coagulating liquid, the ionic liquid elutes from the fiber into the coagulating liquid. In consideration of recycling of the ionic liquid, it is preferable to use ethanol since use of ethanol having high volatility makes it easier to recover the ionic liquid from a mixed liquid of ethanol and the ionic liquid.

### -Polyamide 4-containing composition-

The aforementioned polyamide 4-containing composition contains polyamide 4 and an alkali metal salt and/or an alkaline earth metal salt. The polyamide 4-containing composition may be dissolved in hexafluoroisopropyl alcohol (HFIP) or the like as necessary in order to enable homogeneous dispersion of these metal salts in the resin. The polyamide 4-containing composition is melted by heating to its melting temperature, is spun, and is washed to remove the metal salts.

The content of the alkali metal salt and/or the alkaline earth metal salt contained in the polyamide 4-containing composition can be selected as appropriate depending on the objective without any specific limitations, but is preferably from 5 mass% to 10 mass%. It is preferable for the metal salt content to be in the aforementioned preferable range as this enables improvement of fiber strength of the polyamide 4 fiber.

Note that inclusion of the alkali metal salt and/or the alkaline earth metal salt in the polyamide 4 lowers the melting temperature of the polyamide 4. Accordingly, the content of the alkali metal salt and/or the alkaline earth metal salt can be set such as to lower the melting temperature to a temperature at which the influence of thermal decomposition is small in order that the polyamide 4 fiber can be produced by melt spinning.

### --Alkali metal salt and/or alkaline earth metal salt--

An alkali metal salt such as mentioned above can be selected as appropriate depending on the objective without any specific limitations. Examples of alkali metal salts that can be used include lithium salts, sodium salts, and potassium salts. One of such alkali metal salts may be used individually, or two or more of such alkali metal salts may be used together.

An alkaline earth metal salt such as mentioned above can be selected as appropriate depending on the objective without any specific limitations. Examples of alkaline earth metal salts that can be used include calcium salts, magnesium salts, strontium salts, and barium salts. One of such alkaline earth metal salts may be used individually, or two or more of such alkaline earth metal salts may be used together.

Among these alkali metal salts and alkaline earth metal salts, calcium chloride, lithium chloride, and lithium bromide are preferable in terms of having a strong melting point lowering effect relative to the additive amount thereof, and calcium chloride is more preferable since it is cheaply obtainable.

### -Melt spinning-

Melt spinning refers to a process in which the polyamide 4-containing composition is discharged from a spinneret into a gas at a temperature that is at least as high as its melting temperature, is solidified by cooling, and is wound as a yarn.

The spinning temperature of the polyamide 4-containing composition can be selected as appropriate depending on the objective without any specific limitations other than being at least as high as the melting temperature of the polyamide 4-containing composition. However, the spinning temperature is preferably from 190°C to 240°C. It is preferable for the spinning temperature to be in the aforementioned preferable range in terms of enabling spinning while reducing thermal decomposition of the polyamide 4.

HFIP is a solvent that enables homogenous dispersion of a metal salt in solid polyamide 4 resin. HFIP is used in order to disperse the metal salt in the solid resin. The metal salt can be homogenously dispersed by first dissolving the polyamide 4 in HFIP and then adding the metal salt to the resultant solution. Accordingly, a sufficient amount of HFIP is preferably added to the polyamide 4 resin. After the polyamide 4 resin has been dissolved and mixed, the polyamide 4 resin can be coagulated and recovered by adding the resultant solution into a solvent such as acetone. The obtained coagulated product is the polyamide 4 resin in a state containing the metal salt. The coagulated product is dried prior to melt spinning and is used for spinning once acetone or the like has been sufficiently removed. It should be noted that the metal salt is an additive used in order to lower the melting point of the polyamide 4 and although the metal salt is contained at the time of melt spinning, the metal salt is removed by immersion in warm water or the like after a yarn has been formed by spinning. However, since sites from which the metal salt is removed become voids, it is preferable for the number of such sites to be as small as possible from a viewpoint of strength. Accordingly, the metal salt is preferably a metal salt that significantly lowers the melting point through addition in a small amount and is also preferably a cheap metal salt.

### EXAMPLES

The following describes the presently disclosed tire in more detail through examples. However, the presently disclosed tire is not in any way limited by the following examples and suitable alterations may be made that do not change the essence thereof.

Polyamide fiber obtained by dry-wet spinning, wet spinning, or gel spinning was produced by the method described below.

### (Examples 1-6 and Comparative Example 1)

### <Preparation of ionic liquid solution of polyamide>

Using a model 2P-03 T.K. HIVIS MIX® (HIVIS MIX is a registered trademark in Japan, other countries, or both) produced by PRIMIX Corporation, an ionic liquid was added to polyamide 4 such that the polyamide 4 had a specific concentration indicated in Table 4. A jacket was provided on the outside of a sample container of this device and the internal temperature of the sample container was increased through circulation of a heating medium. Circulation of the heating medium was carried out using an MCAX-20-J produced by MATSUI MFG Co., Ltd. Kneading was performed through rotation and revolution of two blades inside of the container. Mixing was carried out for a specific time indicated in Table 4 while performing heating to reach a specific temperature indicated in Table 4. The resultant mixed liquid was defoamed using a THINKY MIXER ARE-250 produced by Thinky Corporation to obtain an ionic liquid solution of the polyamide. Defoaming was promoted by pouring the spinning solution into a specialized can and subjecting the solution to repeated rotation and revolution at high speed under atmospheric pressure to instigate convection of the solution in the can such that bubbles in the solution rose to the surface one after another. The type of ionic liquid, the dissolving temperature, and the dissolving time were as shown in Table 4. Note that in Comparative Example 1, spinning described below was not performed because the polyamide 4 did not dissolve in BmimSCN used as the ionic liquid.

The resultant ionic liquid solution of the polyamide was extruded under the extrusion conditions described below and was spun by wet spinning, dry-wet spinning, or gel spinning (dry-wet spinning was performed in Examples 2 and 6, dry-wet-type gel spinning was performed in Examples 1 and 5, and wet-type gel spinning was performed in Examples 3 and 4).

### <Extrusion conditions of ionic liquid solution of polyamide>

The ionic liquid solution of the polyamide was heated to a specific spinning temperature and was extruded by an extruder. In the extruding, the nozzle diameter of a spinneret of the extruder was 50 µm and the extrusion amount was approximately 0.8 g/minute per nozzle.

### <Dry-wet spinning>

The ionic liquid solution of the polyamide discharged from the spinneret was initially spun in air and was then introduced into a coagulating liquid in a coagulation bath in order to cause coagulation thereof. The coagulated polyamide 4 fiber was wound and collected while being extended (Examples 2 and 6). The type of coagulating liquid was as shown in Table 4.

### <Wet spinning>

The ionic liquid solution of the polyamide discharged from the spinneret was directly spun into the coagulating liquid in the coagulation bath in order to cause coagulation thereof. The coagulated polyamide 4 fiber was wound and collected while being extended.

### <Gel spinning>

The ionic liquid solution of the polyamide discharged from the spinneret was spun into the coagulating liquid in the coagulation bath either directly or via an air space. The resultant polyamide 4 fiber was wound and collected while being extended in a gel form before coagulation thereof was complete (Examples 1 and 3-5). The type of coagulating liquid was as shown in Table 4.

Polyamide fiber obtained by melt spinning was produced by the method described below.

### (Examples 7 and 8)

### <Melt spinning>

In production of polyamide 4 fiber in Example 7, 10 parts by mass of calcium chloride was added to 90 parts by mass of cake-form polyamide 4 resin, the polyamide 4 resin and the calcium chloride were dissolved in a sufficient amount of hexafluoroisopropyl alcohol (HFIP), acetone was subsequently added in order to cause coagulation of the resin, and sufficient drying was performed to prepare a polyamide 4-containing composition (calcium chloride content in the polyamide 4-containing composition was 10 mass%). The polyamide-containing composition was melted by heating to a spinning temperature indicated in Table 4. The heated polyamide 4 composition was discharged into air at the spinning temperature indicated in Table 4, was solidified by cooling, and was wound as a yarn. The resultant yarn was washed with warm water in order to remove the calcium chloride and yield polyamide 4 fiber (Example 7).

Polyamide 4 fiber in Example 8 was produced by the same polyamide 4 fiber production method as in Example 7 with the exception that, in production of the polyamide 4 fiber as described in Example 7, 5 parts by mass of lithium chloride was added to 95 parts by mass of cake-form polyamide 4 resin (Example 8).

The melt spinning conditions were as shown in Table 4.

### (Comparative Example 2)

In Comparative Example 2, polyamide 66 fiber produced by Kordsa was used.

### <Tensile test>

Each polyamide fiber that was obtained was evaluated using a tensile test machine.

The obtained polyamide fiber was subjected to a tensile test after being false twisted 4 times per 10 cm.

The fiber strength was obtained from the rupture strength. Results for the fiber strength (MPa) of each polyamide fiber are shown in Table 4. A fiber strength (MPa) of at least 900 MPa is suitable for application in tires.

The elastic modulus (GPa) of the polyamide fiber was calculated by calculating the gradient of a straight line section of a stress-strain curve at a tensile strain of no greater than 0.3%. Results for the elastic modulus (GPa) of each polyamide fiber are shown in Table 4. With regards to the elastic modulus (GPa), a higher value indicates a higher elastic modulus.

A tire was produced by the following method.

### <Tire production>

Raw yarn for tire cord-use was spun as a multifilament such as to measure approximately 1,400 dtex. A cord was produced by performing primary twisting of the obtained multifilament at 26 twists/10 cm and then combining two twisted multifilaments and performing secondary twisting at 26 twists/10 cm. The cord was subjected to dipping treatment by immersion in RFL (resorcin-formalin-latex) adhesive and was subjected to heat treatment including a drying process and a baking process in order to produce a dip cord. The dip cord was calendered with coating rubber to prepare a belt reinforcement layer that was then used in production of a 185/65R14 tire through standard molding and vulcanization processes.

### <High-speed durability test>

Tires in which the fibers of Examples 1-8 and Comparative Example 2 had been used were each fitted onto a rim at normal pressure and set to the JATMA prescribed internal pressure. A load equivalent to two times the prescribed load was loaded onto the tire and the tire was subjected to a running test on a steel drum of 3 m in diameter in which the rotational speed was increased by 10 km/h at 15 minute intervals. The running speed directly before breakage of the tire due to the running test was measured. High-speed durability for Examples 1-6 and 8 and Comparative Example 2 is shown in Table 4 as an index in which the running speed for a tire in which the fiber of Example 7 had been used was set as 100. A higher index value indicates better high-speed durability until failure occurs.

### <Measurement of uniformity (RFV)>

RFV (30 N), which is a measure of tire radial direction variation (i.e., up/down variation), was measured for each of the tires by a method prescribed by JASO C607 using a uniformity tester that was installed indoors. Uniformity for Examples 1-6 and 8 and Comparative Example 2 is shown in Table 4 as an index in which the value obtained for the tire in which the fiber of Example 7 had been used was set as 100. A higher index value indicates better uniformity.

**Table 4**

| | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|
| Fiber production conditions | Spinning method | Dry-wet-type gel spinning | Dry-wet spinning | Wet-type gel spinning | Wet-type gel spinning | Dry-wet-type gel spinning | Dry-wet spinning | Melt spinning | Melt spinning | Dry-wet spinning (dissolving not possible) | Commercial product fiber |
| | Resin | PA 4^{*6} | PA 4 | PA 4 | PA 4 | PA 4 | PA 4 | PA 4 | PA 4 | PA 4 | PA 66^{*7} |
| | Solvent | EmimAc^{*1} | EmimAc | EmimDEP^{*2} | EmimDEP | EmimDEP | AmimCl^{*3} | HFIP^{*5} | HFIP | BmimSCN^{*4} | - |
| | β of solvent | 1.05 | 1.05 | 0.97 | 0.97 | 0.97 | 0.81 | - | - | 0.71 | - |
| | PA 4 concentration (mass%) | 20 | 10 | 18 | 15 | 15 | 15 | - | - | 10 | - |
| | Additive to resin | - | - | - | - | - | - | CaCl₂ | LiCl | - | - |
| | Additive amount of additive (mass%) | - | - | - | - | - | - | 10 | 5 | - | - |
| | Dissolving temperature (°C) | 130 | 120 | 140 | 140 | 140 | 120 | - | - | 140 (dissolving not possible) | - |
| | Dissolving time (hr) | 2 | 4 | 2 | 2 | 2 | 3 | - | - | 2 (dissolving not possible) | - |
| | Melting temperature (°C) | - | - | - | - | - | - | 197 | 225 | - | - |
| | Spinning temperature (°C) | 130 | 120 | 140 | 140 | 140 | 120 | 205 | 230 | Spinning not possible | - |
| | Coagulating liquid | Ethanol | 2-Propanol | Ethanol | Ethanol/EmimDEP 90/10 (W/W) | Ethanol/EmimDEP 70/30 (W/W) | Ethanol/water 80/20 (W/W) | - | - | Spinning not possible | - |
| Fiber performance | Fiber strength (MPa) | 1151 | 963 | 1023 | 998 | 955 | 967 | 923 | 938 | not possible | 919 |
| | Elastic modulus (GPa) | 7.98 | 5.32 | 6.46 | 6.13 | 5.64 | 5.40 | 5.01 | 4.95 | Evaluation not possible | 4.56 |
| Tire performance | High-speed durability | 106 | 102 | 105 | 104 | 101 | 101 | 100 | 100 | Evaluation not possible | 99 |
| | Uniformity | 104 | 101 | 103 | 102 | 100 | 100 | 100 | 101 | Evaluation not possible | 95 |

| | | | | | | | | | | | |
|---|---|---|---|---|---|---|---|---|---|---|---|
| (Notes) *1 EmimAc: 1-Ethyl-3-methylimidazolium acetate (produced by Sigma-Aldrich Co. LLC.) *2 EmimDEP: 1-Ethyl-3-methylimidazolium diethylphosphate (produced by Sigma-Aldrich Co. LLC.) *3 AmimCl: 1-Allyl-3-methylimidazolium chloride (produced by Ionic Liquids Technologies Ltd.) *4 BmimSCN: 1-Butyl-3-methylimidazolium thiocyante (produced by Ionic Liquids Technologies Inc.) *5 HFIP: Hexafluoroisopropyl alcohol *6 PA 4: Polyamide 4 (polymerized in-house) *7 PA 66: Polyamide 66 fiber (produced by Kordsa) | | | | | | | | | | | |

Table 4 shows that in the case of polyamide 4 fiber in which polyamide 4 was used (Examples 1-8), it was possible to spin polyamide 4 having excellent fiber strength and elastic modulus. Moreover, it can be seen that tires produced using polyamide 4 fiber (Examples 1-8) contributed to improvement of high-speed durability and uniformity, and that the polyamide 4 fiber in each of Examples 1-8 functioned as a belt reinforcement layer.

### INDUSTRIAL APPLICABILITY

According to the present disclosure, it is possible to provide a tire having improved strength through use of polyamide 4 fiber.

### REFERENCE SIGNS LIST

- 1, 11: extruder
- 2, 12: spinneret
- 3, 13: roller
- 4, 14: ionic liquid solution of polyamide
- 5, 15: coagulation bath
- 6, 16: coagulating liquid
- 7, 17: polyamide 4 fiber
- 8, 18: collecting roller

## Claims

1. A tire comprising
a fiber-rubber composite including polyamide 4 fiber that contains polyamide 4, wherein the polyamide 4 fiber has a fiber strength of at least 920 MPa, and a content of the polyamide 4 in the polyamide 4 fiber is 90mass% to 100mass%.

2. The tire of claim 1, wherein
the polyamide 4 fiber has an elastic modulus of at least 5 GPa.

3. The tire of claim 1, wherein
the polyamide 4 fiber is obtained by wet spinning, dry-wet spinning, or gel spinning of an ionic liquid solution that is prepared by dissolving polyamide 4 in an ionic liquid, and
polarity of the ionic liquid, in terms of a Kamlet-Taft parameter β, is at least 0.80.

4. The tire of claim 3, wherein
an anionic part of the ionic liquid is at least one selected from the group consisting of a halogen ion, a carboxylate ion, a phosphate ion, a phosphonate ion, a phosphinate ion, a sulfate ion, and a sulfonate ion.

5. The tire of claim 4, wherein
the anionic part of the ionic liquid is at least one selected from the group consisting of a chloride ion, an acetate ion, a diethylphosphate ion, and a dimethylphosphate ion.

6. The tire of any one of claims 3-5, wherein
a cationic part of the ionic liquid is at least one selected from the group consisting of an imidazolium ion, a pyridinium ion, an ammonium ion, and a phosphonium ion.

7. The tire of any one of claims 3-6, wherein
the ionic liquid is at least one selected from the group consisting of 1-ethyl-3-methylimidazolium acetate, 1-ethyl-3-methylimidazolium diethylphosphate, 1-ethyl-3-methylimidazolium dimethylphosphate, and 1-allyl-3-methylimidazolium chloride.

8. The tire of any one of claims 3-7, wherein
in the wet spinning, dry-wet spinning, or gel spinning, the ionic liquid solution of the polyamide 4 is coagulated in a liquid containing either or both of water and one or more polar organic solvents.

9. The tire of claim 8, wherein
in the wet spinning, dry-wet spinning, or gel spinning, the ionic liquid solution of the polyamide 4 is coagulated in a liquid containing ethanol or propanol.

10. The tire of any one of claims 3-9, wherein
the polyamide 4 fiber is obtained by dry-wet spinning or gel spinning of the ionic liquid solution.

11. The tire of claim 1, wherein
the polyamide 4 fiber is obtained by melt spinning of a polyamide 4-containing composition that contains polyamide 4 and at least one metal salt selected from the group consisting of alkali metal salts and alkaline earth metal salts.

12. The tire of claim 11, wherein
the polyamide 4-containing composition contains from 5 mass% to 10 mass% of the metal salt.

13. The tire of claim 11 or 12, wherein
the metal salt is calcium chloride.

14. The tire of any one of claims 11-13, wherein
the polyamide 4-containing composition is melt spun at a spinning temperature of from 190°C to 240°C.

## Patentansprüche

1. Reifen, umfassend
ein Faser-Kautschuk-Verbundmaterial, beinhaltend Polyamid-4-Faser, die Polyamid 4 enthält, wobei die Polyamid-4-Faser eine Faserfestigkeit von mindestens 920 MPa aufweist, und ein Gehalt des Polyamid 4 in der Polyamid-4-Faser von 90 Massen-% bis 100 Massen-% beträgt.

2. Reifen nach Anspruch 1, wobei
die Polyamid-4-Faser einen Elastizitätsmodul von mindestens 5 GPa aufweist.

3. Reifen nach Anspruch 1, wobei
die Polyamid-4-Faser durch Nassspinnen, Trocken-Nassspinnen oder Gelspinnen einer Lösung aus ionischer Flüssigkeit erhalten wird, die durch Auflösen von Polyamid 4 in einer ionischen Flüssigkeit hergestellt wird, und
wobei die Polarität der ionischen Flüssigkeit hinsichtlich eines Kamlet-Taft-Parameters β mindestens 0,80 beträgt.

4. Reifen nach Anspruch 3, wobei
ein anionischer Teil der ionischen Flüssigkeit mindestens einer, ausgewählt aus der Gruppe bestehend aus einem Halogen-Ion, einem Carboxylat-Ion, einem Phosphat-Ion, einem Phosphonat-Ion, einem Phosphinat-Ion, einem Sulfat-Ion und einem Sulfonat-Ion ist.

5. Reifen nach Anspruch 4, wobei
der anionische Teil der ionischen Flüssigkeit mindestens einer, ausgewählt aus der Gruppe bestehend aus einem Chlorid-Ion, einem Acetat-Ion, einem Diethylphosphat-Ion und einem Dimethylphosphat-Ion ist.

6. Reifen nach einem der Ansprüche 3 bis 5, wobei
ein kationischer Teil der ionischen Flüssigkeit mindestens einer, ausgewählt aus der Gruppe bestehend aus einem Imidazolium-Ion, einem Pyridinium-Ion, einem Ammonium-Ion und einem Phosphonium-Ion ist.

7. Reifen nach einem der Ansprüche 3 bis 6, wobei
die ionische Flüssigkeit mindestens eine, ausgewählt aus der Gruppe bestehend aus 1-Ethyl-3-methylimidazoliumacetat, 1-Ethyl-3-methylimidazoliumdiethylphosphat, 1-Ethyl-3-methylimidazoliumdimethylphosphat und 1-Allyl-3-methylimidazoliumchlorid ist.

8. Reifen nach einem der Ansprüche 3 bis 7, wobei
beim Nassspinnen, Trocken-Nassspinnen oder Gelspinnen die Lösung aus ionischer Flüssigkeit des Polyamids 4 in einer Flüssigkeit koaguliert wird, die eines oder beides von Wasser und einem oder mehreren polaren organischen Lösemitteln enthält.

9. Reifen nach Anspruch 8, wobei
beim Nassspinnen, Trocken-Nassspinnen oder Gelspinnen die Lösung aus ionischer Flüssigkeit des Polyamids 4 in einer Flüssigkeit koaguliert wird, die Ethanol oder Propanol enthält.

10. Reifen nach einem der Ansprüche 3 bis 9, wobei
die Polyamid-4-Faser durch Trocken-Nassspinnen oder Gelspinnen der Lösung aus ionischer Flüssigkeit erhalten wird.

11. Reifen nach Anspruch 1, wobei
die Polyamid-4-Faser durch Schmelzspinnen einer Polyamid 4 enthaltenden Zusammensetzung erhalten wird, die Polyamid 4 und mindestens ein Metallsalz, ausgewählt aus der Gruppe bestehend aus Alkalimetallsalzen und Erdalkalimetallsalzen, enthält.

12. Reifen nach Anspruch 11, wobei
die Polyamid 4 enthaltende Zusammensetzung von 5 Massen-% bis 10 Massen-% des Metallsalzes enthält.

13. Reifen nach Anspruch 11 oder 12, wobei
das Metallsalz Calciumchlorid ist.

14. Reifen nach einem der Ansprüche 11 bis 13, wobei
die Polyamid 4 enthaltende Zusammensetzung bei einer Spinntemperatur von 190 °C bis 240 °C schmelzgesponnen wird.

## Revendications

1. Pneumatique comprenant
un composite fibre-caoutchouc incluant une fibre de polyamide 4 qui contient du polyamide 4, dans lequel la fibre de polyamide 4 présente une résistance de fibre d'au moins 920 MPa et une teneur en polyamide 4 dans la fibre de polyamide 4 va de 90 % en masse à 100 % en masse.

2. Pneumatique selon la revendication 1, dans lequel
la fibre de polyamide 4 présente un module élastique d'au moins 5 GPa.

3. Pneumatique selon la revendication 1, dans lequel
la fibre de polyamide 4 est obtenue par filage humide, filage sec-humide ou filage à l'état de gel d'une solution liquide ionique qui est préparée par dissolution de polyamide 4 dans un liquide ionique et
la polarité du liquide ionique, en termes d'un paramètre β de Kamlet-Taft, est d'au moins 0,80.

4. Pneumatique selon la revendication 3, dans lequel
une partie anionique du liquide ionique est au moins un ion choisi dans le groupe constitué par un ion halogène, un ion carboxylate, un ion phosphate, un ion phosphonate, un ion phosphinate, un ion sulfate et un ion sulfonate.

5. Pneumatique selon la revendication 4, dans lequel
la partie anionique du liquide ionique est au moins un ion choisi dans le groupe constitué par un ion chlorure, un ion acétate, un ion diéthylphosphate et un ion diméthylphosphate.

6. Pneumatique selon l'une quelconque des revendications 3 à 5, dans lequel
une partie cationique du liquide ionique est au moins un ion choisi dans le groupe constitué par un ion imidazolium, un ion pyridinium, un ion ammonium et un ion phosphonium.

7. Pneumatique selon l'une quelconque des revendications 3 à 6, dans lequel
le liquide ionique est au moins un composé choisi dans le groupe constitué par l'acétate de 1-éthyl-3-méthylimidazolium, le diéthylphosphate de 1-éthyl-3-méthylimidazolium, le diméthylphosphate de 1-éthyl-3-méthylimidazolium et le chlorure de 1-allyl-3-méthylimidazolium.

8. Pneumatique selon l'une quelconque des revendications 3 à 7, dans lequel
dans le filage humide, le filage sec-humide ou le filage à l'état de gel, la solution liquide ionique du polyamide 4 est coagulée dans un liquide contenant l'un ou/et l'autre parmi de l'eau et un ou plusieurs solvants organiques polaires.

9. Pneumatique selon la revendication 8, dans lequel
dans le filage humide, le filage sec-humide ou le filage à l'état de gel, la solution liquide ionique du polyamide 4 est coagulée dans un liquide contenant de l'éthanol ou du propanol.

10. Pneumatique selon l'une quelconque des revendications 3 à 9, dans lequel
la fibre de polyamide 4 est obtenue par filage sec-humide ou filage à l'état de gel de la solution liquide ionique.

11. Pneumatique selon la revendication 1, dans lequel
la fibre de polyamide 4 est obtenue par filage en masse fondue d'une composition contenant du polyamide 4 qui contient du polyamide 4 et au moins un sel métallique choisi dans le groupe constitué par les sels de métal alcalin et les sels de métal alcalino-terreux.

12. Pneumatique selon la revendication 11, dans lequel
la composition contenant du polyamide 4 contient de 5 % en masse à 10 % en masse du sel métallique.

13. Pneumatique selon la revendication 11 ou 12, dans lequel
le sel métallique est le chlorure de calcium.

14. Pneumatique selon l'une quelconque des revendications 11 à 13, dans lequel
la composition contenant du polyamide 4 est filée en masse fondue à une température de filage allant de 190 °C à 240 °C.
